(19) Europäisches Patentamt
European Patent Office
Office européen des brevets

(11) **EP 2 392 714 B1**

(12) **EUROPEAN PATENT SPECIFICATION**

(45) Date of publication and mention
of the grant of the patent:
**25.12.2013 Bulletin 2013/52**

(21) Application number: **10735905.1**

(22) Date of filing: **29.01.2010**

(51) Int Cl.:
*D04H 3/04* (2012.01)     *B32B 5/00* (2006.01)
*C08J 5/06* (2006.01)     *D04H 3/115* (2012.01)
*B29B 11/16* (2006.01)     *B29C 70/34* (2006.01)
*B29C 70/44* (2006.01)     *B29C 70/46* (2006.01)
*B29C 70/54* (2006.01)

(86) International application number:
**PCT/JP2010/051248**

(87) International publication number:
**WO 2010/087443 (05.08.2010 Gazette 2010/31)**

(54) **PROCESS AND APPARATUS FOR PRODUCING REINFORCING-FIBER STRIP BASE HAVING CIRCULAR-ARC PART, AND MULTILAYER STRUCTURE, PREFORM, AND FIBER-REINFORCED RESIN COMPOSITE MATERIAL EACH COMPRISING OR PRODUCED USING THE BASE**

VERFAHREN UND VORRICHTUNG ZUR HERSTELLUNG EINES FASERVERSTÄRKTEN STREIFENGRUNDS MIT RUNDBOGENTEIL SOWIE MEHRLAGIGE STRUKTUR, VORFORM UND FASERVERSTÄRKTER HARZVERBUND MIT DIESEM GRUND BZW. DAMIT HERGESTELLT

PROCEDE ET APPAREIL POUR PRODUIRE UNE BASE DE BANDE EN FIBRES RENFORCÉES, DOTÉE D'UNE PARTIE EN ARC CIRCULAIRE, ET STRUCTURE MULTICOUCHE, PRÉFORME, ET MATIÈRE COMPOSITE DE RÉSINE EN FIBRES RENFORCÉES, LA STRUCTURE, LA PRÉFORME ET LA MATIÈRE ÉTANT PRODUITES EN UTILISANT LA BASE OU COMPRENANT CHACUNE LA BASE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.02.2009 JP 2009021324**

(43) Date of publication of application:
**07.12.2011 Bulletin 2011/49**

(73) Proprietor: **Toray Industries, Inc.**
**Tokyo 103-8666 (JP)**

(72) Inventors:
• **SUZUKI Tamotsu**
**Otsu-shi**
**Shiga 520-8558 (JP)**

• **HANAWA Tatsuya**
**Otsu-shi**
**Shiga 520-8558 (JP)**

(74) Representative: **Hager, Thomas Johannes**
**Hoefer & Partner**
**Patentanwälte**
**Pilgersheimer Strasse 20**
**81543 München (DE)**

(56) References cited:
**EP-A1- 1 731 298**     **EP-A1- 1 932 652**
**EP-A1- 2 233 625**     **WO-A1-98/02606**
**WO-A1-2004/016844**     **WO-A1-2007/018935**
**GB-A- 2 467 417**     **JP-A- 6 198 645**
**JP-A- 7 195 597**     **JP-A- 2004 175 116**
**JP-A- 2004 218 133**

**Description**

Technical Field of the Invention

The present invention relates to a process and an apparatus for producing a reinforcing-fiber strip substrate having a circular-arc part curved along a longitudinal direction of the substrate, a layered structure formed using the reinforcing-fiber strip substrate, a preform formed using the layered structure, and a fiber-reinforced resin composite material molded using the preform.

Background Art of the Invention

A fiber-reinforced resin composite material is broadly known as a material light in weight and high in strength and rigidity. In case where a relatively long fiber-reinforced resin composite material is molded, in order to ensure high strength and rigidity in target directions, a configuration of a layered structure is frequently employed wherein a plurality of reinforcing-fiber strip substrates, in which the orientation directions of reinforcing fibers are set in respective predetermined directions, are stacked. Although there is a case where a layered structure having a configuration of a prepreg impregnated with a non-cured resin into reinforcing fibers is employed, in consideration of easiness for production to a target shape, usually a process is employed wherein a dry reinforcing-fiber layered structure, into which a resin has not been impregnated, is made, the reinforcing-fiber layered structure is formed into a preform having a predetermined shape, a matrix resin is impregnated into the formed preform, and the resin is cured to produce a fiber-reinforced resin composite material having a target shape.

Recently, for example, for a structural member of a body of an airplane, etc., a relatively long fiber-reinforced resin composite material light in weight and high in strength and rigidity has been required. Namely, it has been required to make a long reinforcing material or structural member for an airplane from a fiber-reinforced resin composite material aiming to realize a further light weight. Such a member for an airplane frequently has a cross-sectional shape, for example, such as L, T, I, C, or Z shape, and it is a rare case that the member is straight in the longitudinal direction, and in most cases, the member has a circular-arc part curved along the longitudinal direction at least at a part in the longitudinal direction. As a technology for making a long member of fiber-reinforced resin composite material having such a circular-arc part, for example, Patent document 1 discloses a process wherein a flat preform precursor formed from reinforcing fibers and having a circular-arc shape is prepared, and this is bent in the cross-sectional direction along the curved line of the circular-arc shape. In this disclosed process, it is described that the strain caused in the material is decreased as compared with the case of a material prepared by bending an assembly of straight strip-like reinforcing-fiber materials in the cross-sectional direction and by bending it in the longitudinal direction to form a circular-arc shape, and a high-quality composite material less in defect such as wrinkle and waving can be obtained. In this Patent document, however, it is not shown how the reinforcing-fiber strip substrate curved into a predetermined circular-arc shape is made, and further, how the reinforcing-fiber layered structure stacked with substrates is made.

On the other hand, as a circular-arc reinforcing-fiber layered structure, one is required wherein a plurality of layers each disposed with reinforcing fiber yarns in a plane form at a predetermined angle relative to an axial line extending in a circumferential direction of the circular arc are stacked so that the angles of the respective layers are changed to each other. As a process for making respective curved reinforcing-fiber substrates in such a reinforcing-fiber layered structure, although a process is known for disposing reinforcing-fiber tapes each having a small width at a condition adjacent to each other while maintaining them at a predetermined angle, in order to dispose the small-width reinforcing-fiber tapes while maintaining them at the predetermined angle relative to the axial line curved in a form of a circular-arc shape, it is necessary to dispose the respective small-width reinforcing-fiber tapes while gradually changing the arrangement directions of the reinforcing-fiber yarns of the small-width reinforcing-fiber tapes, and because a high-accuracy positioning control is required, the cost for apparatus becomes high and besides, the productivity is poor.

On the other hand, as a process for making a curved reinforcing-fiber substrate in which the arrangement directions of the reinforcing-fiber yarns are set at predetermined directions, a process disclosed in Patent document 2 is known. In this process, the reinforcing-fiber yarns are fixed by pins, and the arrangement directions of the reinforcing-fiber yarns are curved by changing the mutual positions of the pins. In this process, however, because the tangent lines connecting surfaces of the pins become directions of the reinforcing-fiber yarns, the reinforcing-fiber yarns are disposed at a zigzag form, the adjacent reinforcing-fiber yarns strictly do not become in parallel to each other, and in addition, the fibers extend in a longitudinal form relative to a pin at a position near a turning end portion. In order to reduce these, required are a thin giber bundle and a small pitch between pins, but if so, the productivity is drastically decreased. Further, this process basically is a technology for bending a reinforcing-fiber layered structure in lump sum which is formed by stacking a plurality of reinforcing-fiber layers, different from each other in directions of reinforcing fibers of respective layers, at a multi-layer form. In the technology for bending in lump sum, since the layered structure is deformed uniformly as a whole though essentially respective proper deformation forms for respective layers, whose directions of reinforcing fibers are different from each other, are necessary, wrinkles or sags of fibers partially occur.

Prior art documents

Patent documents

Patent document 1: WO 2004/016844

Patent document 2: JP-A-2004-218133

EP 1 932 652 A1 relates to a method and an apparatus for manufacturing of a curved elongated structural element of composite material, the curved elongated structural element comprising a first elongated portion and a second elongated portion in an angled relation. The method comprises the steps of: providing a substantially flat blank of composite material comprising a first and second elongated edge; folding the blank over a first portion forming surface and a second portion forming surface of a forming tool's flexible tool body for forming the first elongated portion and the second elongated portion; and bending the forming tool's tool body such that its bending moment centre (Mc) prevails essentially adjacent the first portion forming surface.

WO 2007/018935 A1 teaches, a device to fabricate a composite item, the device placing a composite ply on a curved form at about 0 DEG relative to a longitudinal axis of the form. The form includes a web surface and a cap surface. The device includes a web compaction roller and a set of guides. The web compaction roller compacts a composite material upon the web surface and generate a web ply. The set of guide rollers urges against the cap surface. The compaction roller is directed along the form by the guide rollers.

Summary of the Invention

Problems to be solved by the Invention

Paying attention to the limit in the above-described conventional technologies, an object of the present invention is to provide a process and an apparatus of production which can easily and securely obtain a reinforcing-fiber strip substrate having a circular-arc part in that reinforcing-fiber yarns are arranged over substantially the entire surface of a curved substrate at a desired form.

Further, another object of the present invention is to also provide a reinforcing-fiber layered structure formed using the reinforcing-fiber strip substrate which is produced by such a process, a preform formed using the layered structure, and a fiber-reinforced resin composite material molded using the preform.

Means for solving the Problems

To achieve the above objects, the present invention provides a process for producing a reinforcing-fiber strip substrate having a circular-arc part characterized in that one surface of a strip-shaped, unidirectional reinforcing-fiber substrate formed by arranging a plurality of reinforcing-fiber strands in one direction in parallel with each other is brought into contact with a flexible member, the unidirectional reinforcing-fiber substrate being contacted is deformed into a circular-arc shape by deforming at least a part of the flexible member into a circular-arc shape in a direction extending along its contact surface with the unidirectional reinforcing-fiber substrate, and thereafter, the flexible member is separated from the unidirectional reinforcing-fiber substrate having been deformed.

In such a process according to the present invention, in particular a flexible member capable of being curved is used, and a strip-shaped, unidirectional reinforcing-fiber substrate being brought into contact with the flexible member is deformed into a circular-arc shape together with deformation to be curved of the flexible member. Since the flexible member comprising a flexible material can be deformed to be curved uniformly over the whole of the surface of a portion to be deformed to be curved, the unidirectional reinforcing-fiber substrate being contacted with the surface as a contact surface can also be deformed to be curved uniformly into a circular-arc shape over the whole of the contact surface, the respective reinforcing-fiber yarns themselves are moved to desired positions, and a reinforcing-fiber strip substrate having a circular-arc part with a desired target form can be obtained.

In the above-described process for producing a reinforcing-fiber strip substrate according to the present invention, a process may be employed wherein a member, formed by a plurality of elongated small pieces capable of being varied with mutual positions which are disposed adjacent to each other, is used as the above-described flexible member, and at a condition where a longitudinal direction of the small pieces and an extending direction of the reinforcing-fiber strands coincide with each other, the above-described one surface of the unidirectional reinforcing-fiber substrate is brought into contact with the flexible member. In such a configuration, because the respective small pieces can be deformed more finely and more adequately, even as the whole of the flexible member arranged with those small pieces adjacent to each other, the respective parts can be deformed more adequately, and the unidirectional reinforcing-fiber strip substrate being contacted with the flexible member can also be deformed more adequately into desired shapes at respective parts.

Further, in the above-described process for producing a reinforcing-fiber strip substrate according to the present invention, it is possible to employ a process wherein the unidirectional reinforcing-fiber substrate is heated at a condition where the substrate is deformed into the circular-arc shape, and thereafter, by cooling the substrate, the circular-arc shape of the substrate is fixed. Thus, by fixing the circular-arc part of the reinforcing-fiber strip substrate to a predetermined shape, even when the reinforcing-fiber strip substrates are stacked to form a layered structure, it may become possible to handle them easily while maintaining the predetermined shapes thereof.

Further, the process for producing a reinforcing-fiber strip substrate according to the present invention can be applied to a substrate in which reinforcing-fiber strands are arranged in various directions. In case where a plurality of reinforcing-fiber strip substrates are stacked to form a layered structure, because usually substrates whose reinforcing-fiber strands are arranged in various directions are stacked as reinforcing-fiber layers, if the respective reinforcing-fiber substrates are curved in desired shapes and the reinforcing-fiber strands thereof are arranged in desired directions, desired shape and reinforcing fiber arrangement form can be realized as the whole of the reinforcing-fiber layered structure. For example, in case where a unidirectional reinforcing-fiber substrate arranged with the reinforcing-fiber strands at an angle of 30 degrees or more and 90 degrees or less relative to a longitudinal direction of the substrate is used, when the above-described flexible member is deformed into the circular-arc shape, an interval between the reinforcing-fiber strands can be changed by contracting an inner-radius side of the circular-arc shape in a circumferential direction and/or expanding an outer-radius side of the circular-arc shape in a circumferential direction. In such a process, it becomes possible to realize a formation in which the reinforcing-fiber strands are adequately distributed over the entire surface of the reinforcing-fiber strip substrate to be formed into a curved shape.

In this process, for example, it is preferred to employ a manner wherein, using a unidirectional reinforcing-fiber substrate formed by connecting the reinforcing-fiber strands to each other by auxiliary yarns extending in a direction across the reinforcing-fiber strands in which a gap between the reinforcing-fiber strands satisfies the following equation, when the flexible member is deformed into the circular-arc shape, the interval between the reinforcing-fiber strands is contracted by contracting an inner-radius side of the circular-arc shape in a circumferential direction.

$$d/W1 \geqq W2/r1$$

W1: Width of reinforcing-fiber strand
d : Gap between reinforcing-fiber strands
r1: Inner radius of circular-arc shape
W2: Width of unidirectional reinforcing-fiber substrate

Further, in case where a unidirectional reinforcing-fiber substrate arranged with reinforcing-fiber strands in a longitudinal direction of the substrate in parallel with each other is used, when the flexible member is deformed into the circular-arc shape, the flexible member can be deformed so that the reinforcing-fiber strands mutually move in their longitudinal directions at a condition of parallel displacement (namely, so that the reinforcing-fiber strands mutually shift from each other in the longitudinal direction). In such a manner, it becomes possible to curve the respective reinforcing-fiber strands, extending in the longitudinal direction, into desired circular-arc shapes, and to prevent undesired local deformation or local stress from being left between the reinforcing-fiber strands.

Further, in the process for producing a reinforcing-fiber strip substrate according to the present invention, a process may be employed wherein, when the flexible member is deformed into the circular-arc shape, a support plate having a flat surface is disposed at a side of the unidirectional reinforcing-fiber substrate, opposite to a side disposed with the flexible member, and the unidirectional reinforcing-fiber substrate is nipped by the flexible member and the support plate. In this case, because the support plate is not deformed to be curved, when the flexible member is deformed into the circular-arc shape, a relative sliding occurs between the support plate and the unidirectional reinforcing-fiber substrate which is deformed into the circular-arc shape together with the deformation of the flexible member. Therefore, the sliding resistance is preferably to be made small so that the curved form of the unidirectional reinforcing-fiber substrate does not collapse.

As such a support plate, for example, an electrostatic attractor plate capable of attracting an object material by a static electricity can be used.

The present invention also provides a reinforcing-fiber layered structure having a circular-arc part wherein a plurality of kinds of reinforcing-fiber strip substrates, each having a circular-arc part, whose directions of reinforcing-fiber strands are different from each other, and which are obtained by the above-described process, are layered. Since the stacked respective reinforcing-fiber strip substrates are formed as desired curved forms, respectively, also as the whole of the layered structure, a reinforcing-fiber layered structure having a desired formation can be realized wherein the reinforcing fibers of the respective reinforcing-fiber layers are adequately arranged in desired directions.

Further, the present invention also provides a preform formed by putting a reinforcing-fiber layered structure thus formed along a stereo-shaped mold having a circular-arc part in a longitudinal direction. Since the reinforcing-fiber layered structure is formed in a desired formation, the preform formed by putting it along a mold with a predetermined shape can also be easily formed in a desired formation.

Furthermore, the present invention also provides a fiber-reinforced resin composite material produced by impregnating a matrix resin into a preform thus formed and curing the matrix resin having been impregnated. Since the preform is formed in a desired formation, the fiber-reinforced resin composite material produced by impregnating a resin thereinto and curing the resin can also be easily made in a desired target formation.

An apparatus for producing a reinforcing-fiber strip substrate having a circular-arc part according to the present invention is characterized in that the apparatus is for deforming at least a part of a strip-shaped, unidirectional reinforcing-fiber substrate, formed by arranging a plurality of reinforcing-fiber strands in one direction in parallel with each other, into a circular-arc shape, and the apparatus comprises a flexible member having a flat contact surface with the unidirectional reinforcing-fiber substrate in which the contact surface can be bent from a straight state in a longitudinal direction into a circular-arc shape in a direction along the contact surface, a straightening means for straightening the flexible member in the longitudinal direction, and a circular-arc shape achieving means for making the flexible member in a state of the circular-arc shape.

In such an apparatus for producing a reinforcing-fiber strip substrate according to the present invention, the unidirectional reinforcing-fiber substrate disposed on the flexible member is deformed into a circular-arc shape together with deformation of the flexible member. The flexible member is made at a straight state in the longitudinal direction by the straightening means, it is made at a state of a target circular-arc shape by the circular-arc shape achieving means when the above-described unidirectional reinforcing-fiber substrate is curved and deformed, and after the curve deformation of the unidirectional reinforcing-fiber substrate, it is again made at a straight state in the longitudinal direction by the straightening means in preparation for the next curve deformation. Therefore, by this apparatus, it is possible to produce a plurality of curved reinforcing-fiber strip substrates in order. In case where a different circular-arc shape is formed, the shape of the circular-arc shape achieving means may be changed. By the apparatus having such a structure, desired curved reinforcing-fiber strip substrates are produced one after another efficiently in a short period of time.

In the above-described apparatus for producing a reinforcing-fiber strip substrate according to the present invention, the above-described flexible member can comprise, for example, a plurality of elongated small pieces capable of being varied with mutual positions which are disposed adjacent to each other. In such a structure, as aforementioned, because the respective small pieces can be deformed more finely and more adequately, the whole of the flexible member arranged with those small pieces adjacent to each other can also be desirably deformed more adequately, and using the flexible member, a reinforcing-fiber strip substrate having a desired circular-arc part can be produced.

Further, in the above-described apparatus for producing a reinforcing-fiber strip substrate according to the present invention, a structure may be employed wherein the above-described contact surface of the flexible member is formed by arranging a plurality of elongated small pieces extending in a direction across a longitudinal direction of the contact surface in parallel with each other along the longitudinal direction of the contact surface, longitudinal directions of respective small pieces are set at contact surface, and respective small pieces are provided so as to be able to be rotated relative to each other or so as to be able to be rotated relative to each other and moved relative to each other in the longitudinal directions of small pieces. Such a structure is suitable for a substrate in which the arrangement directions of the reinforcing-fiber strands are set at angles of 30 degrees or more and 90 degrees or less relative to the longitudinal direction of the substrate, and in this structure, when the flexible member is made to a circular-arc state by the circular-arc shape achieving means, since the respective small pieces having been arranged at predetermined angles relative to the longitudinal direction can rotate adequately or can move relative to each other in the longitudinal directions of small pieces together with rotation, the respective small pieces can be directed in respective optimum directions under a condition where the flexible member is curved, and along the directions of the respective small pieces, the reinforcing-fiber strands located at the respective parts of the reinforcing-fiber strip substrate disposed at a position corresponding to the small pieces can also be directed in respective optimum directions. As a result, a formation can be easily realized wherein the reinforcing-fiber strands located at the respective parts of the reinforcing-fiber strip substrate formed to be curved are gradually changed with angle along the circumferential direction of the curved shape, and therefore, a desirable arrangement formation of the reinforcing-fiber strands, which has been difficult to be obtained by a conventional apparatus, can be obtained.

Further, in the above-described structure, various formations can be employed as the flexible member and the structure therearound. For example, a formation can be employed wherein the above-described flexible member comprises a deformable member capable of being recovered to a straightened shape from a shape bent into a circular-arc shape, and the above-described small pieces connected thereto. In this formation, a structure may be employed wherein the small pieces are connected to the deformable member at a condition with a constant positional relationship (at a condition where the relative positional relationship is fixed at a substantially constant positional relationship). Alternatively, a structure may also be employed wherein the small pieces are connected to the deformable member at a condition free to rotate. Furthermore, a structure may also be employed wherein a small piece pitch regulating means is provided for regulating a pitch between adjacent small pieces to a predetermined value at an appropriate position in a longitudinal direction of small piece at a state where the flexible member is bent into a circular-arc shape. The regulation of the pitch of small pieces can be performed at an arbitrary position of each small piece, and for example, it is possible to regulate the pitch at the tip side of the small piece or to regulate the pitch at an intermediate position in the longitudinal direction of each small piece.

Further, a structure may be employed wherein the contact surface of the flexible member is formed by arranging a plurality of elongated small pieces extending in a direction along a longitudinal direction of the contact surface in parallel with each other along a direction across the longitudinal direction of the contact surface, and respective small pieces are constituted so as to be able to be deformed into a circular-arc shape in a direction along the contact surface and are provided so that small pieces adjacent to each other can mutually move in their longitudinal directions at a condition of parallel displacement when deformed into the circular-arc shape. Such a structure is suitable for a case where the arrangement directions of the reinforcing-fiber strands are set at directions along the longitudinal direction of the substrate, and in this structure, when the flexible member is made to a circular-arc state by the circular-arc shape achieving means, since the small pieces adjacent to each other are moved relative to each other in their longitudinal directions at a condition of parallel displacement, the respective small pieces can be curved in respective optimum shapes, and along the curved shapes of the respective small pieces, the reinforcing-fiber strands located at the respective parts of the reinforcing-fiber strip substrate disposed at a position corresponding to the small pieces can also be curved in respective optimum shapes. As a result, a formation can be easily realized wherein the reinforcing-fiber strands of the reinforcing-fiber strip substrate formed to be curved are curved in desirable forms along the circumferential direction of the curved shape, respectively, and therefore, a desirable arrangement formation of the reinforcing-fiber strands of the curved substrate, which has been difficult to be obtained by a conventional apparatus, can be obtained.

Further, in the apparatus for producing a reinforcing-fiber strip substrate according to the present invention, a structure may be employed wherein a support plate is provided which is disposed at a side of the unidirectional reinforcing-fiber substrate, opposite to a side disposed with the flexible member, and which has a flat contact surface capable of being brought into contact with the unidirectional reinforcing-fiber substrate always during a time when the flat contact surface of the flexible member is deformed from the straight state in the longitudinal direction to a state of the circular-arc shape formed by being bent. The unidirectional reinforcing-fiber substrate to be formed to be curved is nipped between the flat contact surface of the flexible member and the flat contact surface of the support plate, and when the substrate is curved, a relative sliding is carried out between the substrate and the flat contact surface of the support plate being contacted therewith. The substrate is curved into a target circular-arc shape at a plan view while being maintained at a flat plate form, and a desired curved substrate can be easily produced. As such a support plate, for example, an electrostatic attractor plate capable of attracting an object material by a static electricity can be used.

Further, a structure may be employed wherein the above-described support plate is provided movably in directions for approaching to and retreating from the contact surface of the flexible member in a direction perpendicular to the contact surface, and movably in a direction parallel to the contact surface, and whereby, in the process for making the curved substrate and in the process for making the reinforcing-fiber layered structure stacked with the curved substrates, the support plate can be moved as needed.

Effect according to the Invention

In the process and the apparatus for producing a reinforcing-fiber strip substrate having a circular-arc part according to the present invention, by using a flexible member capable of being curved into a desired shape and curving a unidirectional reinforcing-fiber substrate together with the flexible member, a curved reinforcing-fiber strip substrate having a desirable form can be produced efficiently.

Further, in the reinforcing-fiber layered structure according to the present invention, by being stacked with the above-described curved reinforcing-fiber strip substrates each having a desirable form by a predetermined number, a desired form can be configured as the whole of the layered structure.

Further, in the preform according to the present invention, since the above-described reinforcing-fiber layered structure formed at a desired configuration is formed along a mold having a predetermined shape to make the preform, even in the formation of the preform, a desired arrangement formation of the reinforcing-fiber strands in the curved shape can be maintained.

Furthermore, in the fiber-reinforced resin composite material according to the present invention, since a resin is impregnated into the above-described preform formed in a desired shape and the resin is cured, the fiber-reinforced resin composite material, which is a final molded material, also becomes a composite material capable of realizing desirable properties in which reinforcing-fiber strands are arranged at a desired formation.

Brief explanation of the drawings

[Fig. 1] Fig. 1 is a schematic vertical sectional view of an apparatus for carrying out a process for producing a reinforcing-fiber strip substrate having a circular-arc part according to an embodiment of the present invention.
[Fig. 2] Fig. 2 is a perspective view of the apparatus depicted in Fig. 1.
[Fig. 3] Fig. 3 depicts schematic plan views showing operation states of the apparatus depicted in Fig. 1, (A) shows a state where a flexible member is straightened, and (B) shows a state where the flexible member is curved.
[Fig. 4] Fig. 4 depicts schematic plan views showing an example of configuration of a flexible member in the apparatus depicted in Fig. 1, (A) shows a state where the flexible member is straightened, and (B) shows a state where the flexible member is curved.

[Fig. 5] Fig. 5 is a partial plan view showing an example of a unidirectional reinforcing-fiber substrate.

[Fig. 6] Fig. 6 depicts partial plan views showing other examples (A), (B) and (C) of unidirectional reinforcing-fiber substrates (each example in which reinforcing-fiber strands are arranged at 90 degrees relative to a longitudinal direction of the substrate).

[Fig. 7] Fig. 7 depicts schematic plan views of flexible members in case of using substrates depicted in Fig. 6, each of (A), (C) and (E) shows a state where a flexible member is straightened, and each of (B), (D) and (F) shows a state where a flexible member is curved.

[Fig. 8] Fig. 8 depicts partial plan views showing further examples (A), (B) and (C) of unidirectional reinforcing-fiber substrates (each example in which reinforcing-fiber strands are arranged at 45 degrees relative to a longitudinal direction of the substrate).

[Fig. 9] Fig. 9 depicts schematic plan views of flexible members in case of using substrates depicted in Fig. 8, each of (A), (C) and (E) shows a state where a flexible member is straightened, and each of (B), (D) and (F) shows a state where a flexible member is curved.

[Fig. 10] Fig. 10 depicts partial plan views of flexible members showing examples (A) and (B) each where respective small pieces are connected to a deformable member at a condition free to rotate.

[Fig. 11] Fig. 11 depicts partial plan views a straightened state (A) and a curved state (B) of a flexible member having a small piece pitch regulating means.

[Fig. 12] Fig. 12 is a perspective view of a preform according to an embodiment of the present invention.

[Fig. 13] Fig. 13 is a perspective view of a preform according to another embodiment of the present invention.

[Fig. 14] Fig. 14 is a perspective view of a preform according to a further embodiment of the present invention.

[Fig. 15] Fig. 15 is a schematic perspective view of a molding apparatus showing an example of production of a fiber-reinforced resin composite material according to an embodiment of the present invention.

[Fig. 16] Fig. 16 is a schematic perspective view of a molding apparatus showing another example of production of a fiber-reinforced resin composite material according to another embodiment of the present invention.

[Fig. 17] Fig. 17 depicts schematic plan views of reinforcing-fiber sheets showing examples each where a cut line is provided on a reinforcing-fiber sheet.

Embodiments for carrying out the Invention

Hereinafter, desirable embodiments of the present invention will be explained referring to figures.

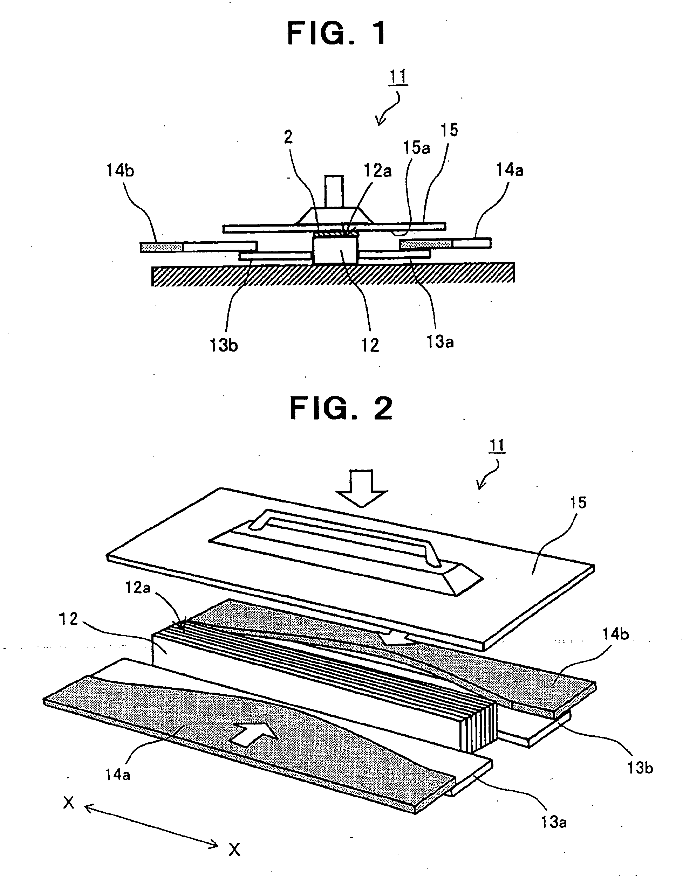

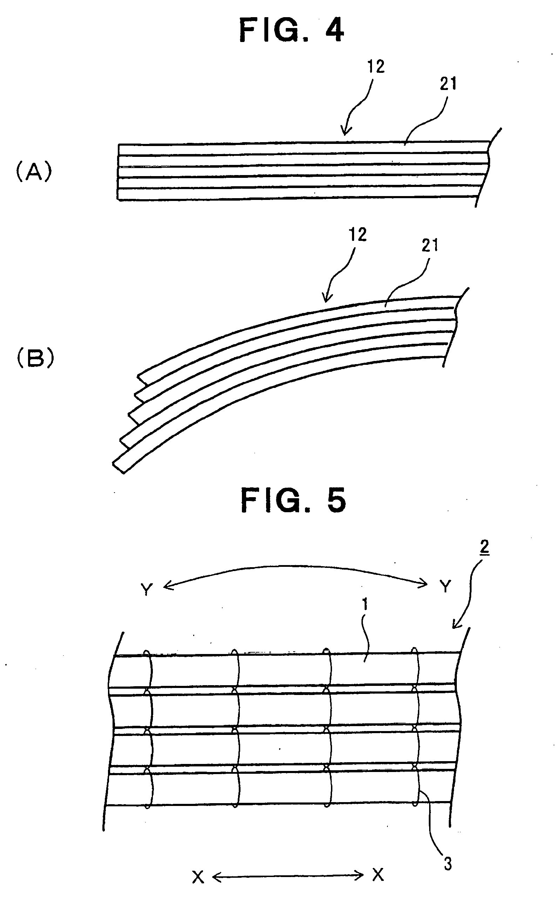

Figs. 1 to 5 show an apparatus for carrying out a process for producing a reinforcing-fiber strip substrate having a circular-arc part according to an embodiment of the present invention, together with the process for production. The apparatus shown in Figs. 1 to 4 is exemplified as an apparatus for curving and deforming at least a part of a strip-shaped, unidirectional reinforcing-fiber substrate 2, formed by arranging reinforcing-fiber strands 1 in one direction of the longitudinal direction of substrate X-X in parallel with each other such as one shown in Fig. 5, into a circular-arc shape in a direction extending along the substrate longitudinal direction X-X (the direction of the curved shape: Y-Y). The substrate 2 shown in Fig. 5 is formed as a unidirectional reinforcing-fiber substrate 2 in which reinforcing-fiber strands 1 are connected to each other by auxiliary yarns 3 extending in a direction across the reinforcing-fiber strands 1.

In Fig. 1 and Fig. 2, an apparatus 11 for producing a reinforcing-fiber strip substrate having a circular-arc part is an apparatus for deforming at least a part of a strip-shaped, unidirectional reinforcing-fiber substrate 2 such as one shown in Fig. 5, formed by arranging reinforcing-fiber strands 1 in one direction in parallel with each other, into a circular-arc shape, and the apparatus 11 comprises a flexible member 12 having a flat contact surface 12a with the unidirectional reinforcing-fiber substrate 2 in which the contact surface 12a can be bent from a straight state in the substrate longitudinal direction X-X into a circular-arc shape in a plane direction along the contact surface 12a, straightening means 13a, 13b for straightening this flexible member 12 in the longitudinal direction X-X, and circular-arc shape achieving means 14a, 14b for making the flexible member 12 in a curved state of the circular-arc shape. In this embodiment, these straightening means 13a, 13b and circular-arc shape achieving means 14a, 14b are each formed from a pair of plate members facing to each other, and the pair of plate members are provided so as to be able to approach to and separate from each other. Further, in this embodiment, in the apparatus 11, a support plate 15 is provided which is disposed at a side of the unidirectional reinforcing-fiber substrate 2 disposed on the flexible member 12, opposite to a side of the substrate 2 disposed with the flexible member 12, and which has a flat contact surface 15a capable of being brought into contact with the unidirectional reinforcing-fiber substrate 2 always during a time when the flat contact surface 12a of the flexible member 12 is deformed from the straight state in the longitudinal direction to a state of the circular-arc shape formed by being bent. This support plate 15 is provided movably in a vertical direction.

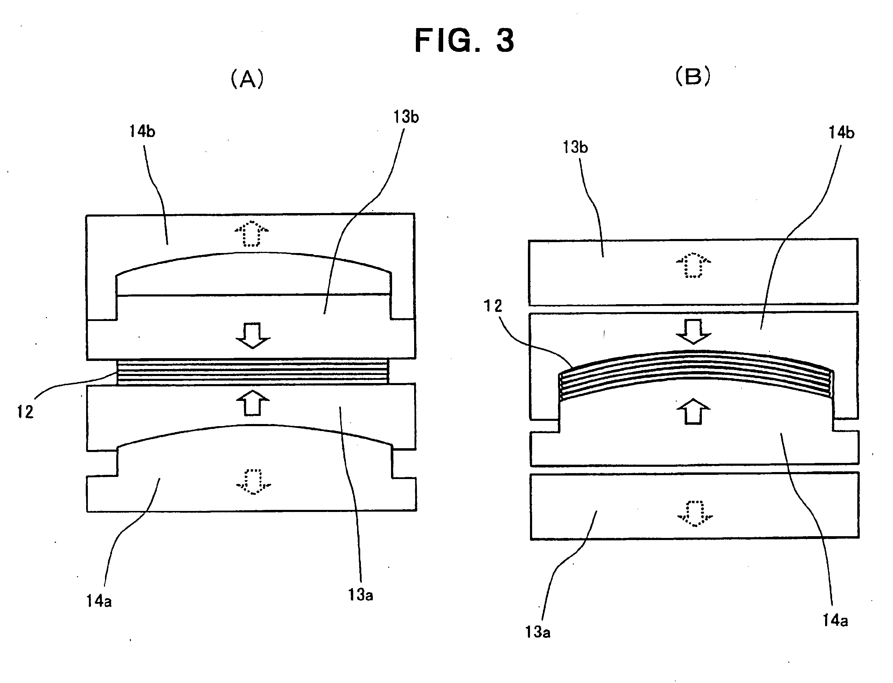

The operation of this apparatus for production will be explained referring to Figs. 2 and 3.

As shown in Fig. 2 and Fig. 3(A), by nipping flexible member 12 from both surface sides by straightening means 13a, 13b, the flexible member 12 is made to a straight state in the longitudinal direction X-X along the straight side edge portions of the straightening means 13a, 13b. At this state, unidirectional reinforcing-fiber substrate 2 is placed on the flexible member 12, support plate 15 is lowered, and the reinforcing-fiber substrate 2 is nipped between the flexible member 12 and the support plate 15 such that the substrate can slide relative to contact surface 15a of the support plate 15. From this state, the pair of straightening means 13a, 13b are moved in a direction being separated from each other, and circular-arc shape achieving means 14a, 14b are moved in a direction being approached to each other. Accompanying with this operation of circular-arc shape achieving means 14a, 14b, as shown in Fig. 3(B), flexible member 12 is nipped between the circular-arc shape achieving means 14a, 14b, and deformed to be curved into a circular-arc shape along the shapes of the side surfaces of the circular-arc shape achieving means 14a, 14b. Together with this flexible member 12, unidirectional reinforcing-fiber substrate 2 being contacted with the contact surface 12a thereof is also deformed to be curved into the same shape as that of the flexible member 12, and the deformation of the unidirectional reinforcing-fiber substrate 2 into a target circular-arc curved shape can be achieved. After the deformation into a predetermined curved shape, support plate 15 may be lifted up to be separated, and the curved unidirectional reinforcing-fiber substrate 2 may be taken out. If an electrostatic attractor plate capable of attracting an object material (unidirectional reinforcing-fiber substrate 2) by a static electricity is used as the support plate 15, it becomes possible to perform the contact with and the separation from the unidirectional reinforcing-fiber substrate 2 extremely easily and properly. Before or after the above-described taking out, as aforementioned, a manner may be employed wherein unidirectional reinforcing-fiber substrate 2 is heated at a condition being deformed to be curved, and thereafter, cooled to be fixed with the curved shape. Concretely, heat medium type or electric heater type heating and/or cooling means can be provided to the support plate 15. After the operation for forming the curved shape of unidirectional reinforcing-fiber substrate 2, flexible member 12 may be returned to the original straight state by the aforementioned straightening means 13a, 13b, and the above-described operation for a next substrate may be repeated.

In the above-described deformation into the circular-arc shape of flexible member 12, if a configuration such as one shown in Fig. 4 is employed for example, more smooth deformation becomes possible. Namely, in order to deform the flexible member so that reinforcing-fiber strands 1 of unidirectional reinforcing-fiber substrate 2 are moved relative to each other at a condition of parallel displacement, as shown in Fig. 4(A), a configuration is employed wherein the contact surface (indicated by symbol 12a in Fig. 1) of flexible member 12 is formed by arranging a plurality of elongated small pieces 21, extending in a direction along the longitudinal direction of the contact surface, in parallel to each other along a direction across the longitudinal direction of the contact surface. Then, as shown in Fig. 4(B), a configuration can be employed wherein the respective small pieces 21 structured so as to be able to be deformed into a circular-arc shape in a direction along the above-described contact surface, and they are provided such that, when deformed into the circular-arc shape, the adjacent small pieces 21 can move relative to each other in the longitudinal direction at a condition of parallel displacement. In such a configuration, since small pieces 21 adjacent to each other are moved in parallel with each other in the longitudinal direction when a circular-arc state is made, the respective small pieces 21 do not restrict each other in the deformation direction, and the respective small pieces 21 themselves can be curved into respective optimum shapes. Therefore, along the curved shapes of the respective small pieces 21, reinforcing-fiber strands 1 in the respective parts of reinforcing-fiber strip substrate 2, which are arranged at the positions corresponding to those of the small pieces, are also curved into respective optimum shapes, and over the whole of the curved reinforcing-fiber strip substrate 2, desirably curved reinforcing-fiber strands 1 can be distributed.

Where, as the material of small pieces 21 shown in Fig. 4, a soft material such as a rubber or an elastomer, formed as a plate-like shape, is preferably used. Further, although unidirectional reinforcing-fiber substrate 2 shown in this embodiment has a formation in which auxiliary yarns 3 extend continuously in a direction across reinforcing-fiber strands 1, in this case, the auxiliary yarns 3 are preferably given with slacks between the reinforcing-fiber strands in order not to prevent movement of the reinforcing-fiber strands 1 relative to each other. By such a configuration, when the unidirectional reinforcing-fiber substrate is formed in a curved shape, by the mutual movement of the reinforcing-fiber strands, the auxiliary yarns located at a position nearer the terminal end side of the circular arc are inclined more greatly relative to the longitudinal direction of the reinforcing-fiber strands, and it becomes possible that the auxiliary yarns follow this deformation. The amount of the slack between the reinforcing-fiber strands can be appropriately decided geometrically from width of reinforcing-fiber strand, radius of curvature of circular arc and length (angle) of circular-arc part.

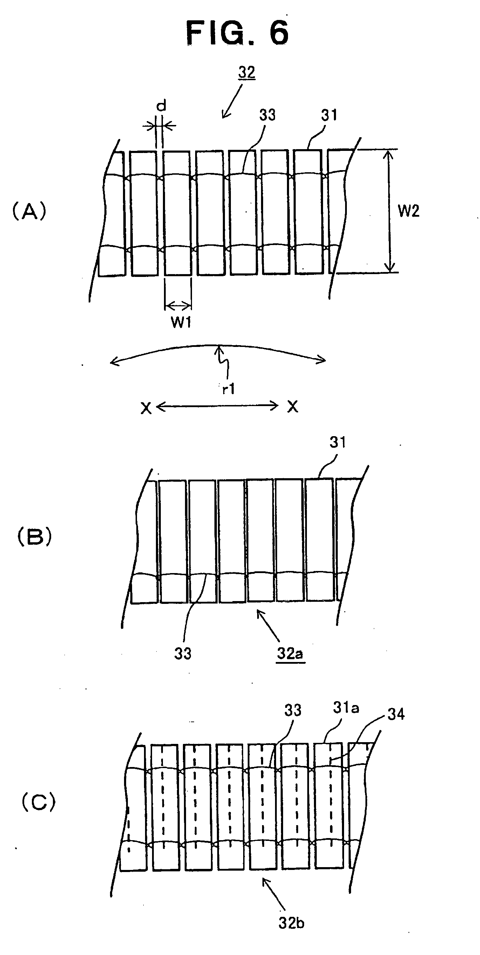

Although the above-described explanation has been carried out with respect to a case of unidirectional reinforcing-fiber strip substrate 2 in which reinforcing-fiber strands 1 are arranged in parallel to each other in one direction of the substrate longitudinal direction X-X, it can also be applied to a substrate in which the reinforcing-fiber strands are arranged in another direction, for example, the reinforcing-fiber strands are arranged at an angle of 30 degrees or more and 90 degrees or less relative to the longitudinal direction of a substrate. For example, as shown in Fig. 6(A) with a case of a unidirectional reinforcing-fiber strip substrate 32 arranging reinforcing-fiber strands 31 at an angle of 90 degrees relative to the longitudinal direction X-X of the substrate, it is possible to curve this substrate 32 at a predetermined radius of curvature along its longitudinal direction X-X together with the flexible member. Symbol 33 in Fig. 6(A) indicates an auxiliary yarn for connecting the reinforcing-fiber strands 31 to each other. Although reinforcing-fiber strands 31 are connected to each other by two auxiliary yarns 33 in the embodiment shown in Fig. 6(A), as shown in Fig. 6 (B), it is possible to form a unidirectional reinforcing-fiber strip substrate 32a by connecting reinforcing-fiber strands 31 to each other by a single auxiliary yarn 33 at any positions in the longitudinal direction of the reinforcing-fiber strands 31. In such a configuration, when the unidirectional reinforcing-fiber substrate 32a is curved in a circular-arc shape using a flexible member described below, the freedom of displacement of adjacent reinforcing-fiber strands 31 can be increased, and the operation of making the curve can be easily carried out. Further, as shown in Fig. 6(C), by using reinforcing-fiber strands 31a each having a cut line 34 extending up to an intermediate position, when a unidirectional reinforcing-fiber substrate 32b is deformed to be curved, the freedom of displacement and deformation of the reinforcing-fiber strands 31a themselves can also be increased.

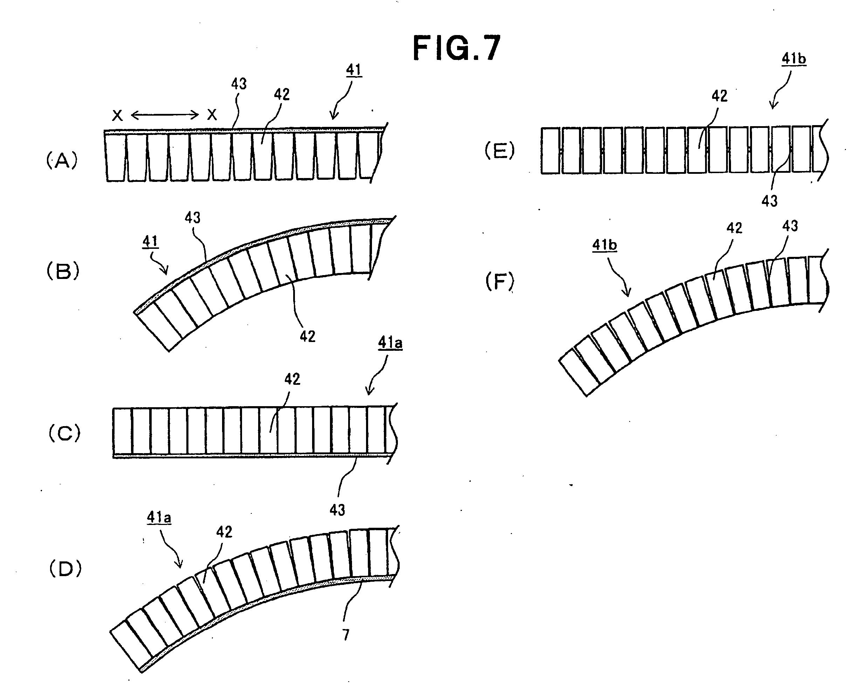

For the above described unidirectional reinforcing-fiber strip substrate arranged with the reinforcing-fiber strands at an angle of 90 degrees, for example, the following flexible member can be used. For example, as shown in Fig. 7(A), a structure can be employed wherein flexible member 41, particularly, the contact surface thereof with the substrate, is formed by arranging a plurality of elongated small pieces 42, each extending in a direction across the longitudinal direction X-X of the contact surface, along the longitudinal direction of the contact surface. Each small piece 42 can be set so that the longitudinal direction of small piece 42 has an appropriate angle, for example, in a range of 30 degrees or more and 90 degrees or less relative to the longitudinal direction X-X of the contact surface and the small piece can be rotated, depending on the objective unidirectional reinforcing-fiber substrate to be curved, and for example, for substrate 32 shown in the above-described Fig. 6(A), the longitudinal direction of small piece 42 may be set at an angle of 90 degrees relative to the longitudinal direction X-X of the contact surface. In such a configuration, as shown in Fig. 7(B), when the flexible member is deformed into a circular-arc shape, by contracting the inner-radius side of the circular-arc shape in a circumferential direction, the interval between the reinforcing-fiber strands can be changed, and it becomes to achieve a uniform distribution of the reinforcing-fiber strands. Where, it is preferred that small pieces 42 shown in Figs. 7 (A) and (B) comprise, for example, resin plates, because they are light in weight and they can be moved easily, and that their upper portions are connected to each other, for example, by a metal plate spring 43 which is straight at no-load condition, because it has an operation for returning the deformation of the flexible member to a straight condition and the small pieces 42 can be easily recovered to be arranged in parallel to each other.

Such a relative positional relationship between small pieces 42 and plate spring 43 connecting them can also be set so as to be shown in Figs. 7 (C) and (D), and in such a flexible member 41a thus constructed, by expanding the outer-radius side of the circular-arc shape in the circumferential direction, the interval between the reinforcing-fiber strands can be changed, and it becomes to achieve a uniform distribution of the reinforcing-fiber strands. Further, as shown in Figs. 7 (E) and (F), the respective small pieces 42 can also be connected by plate spring 43 at their intermediate portions in the longitudinal direction of the small pieces 42 (in the example shown in the figure, central portions), and in such a flexible member thus constructed, by contracting the inner-radius side of the circular-arc shape in the circumferential direction and expanding the outer-radius side of the circular-arc shape in the circumferential direction, the interval between the reinforcing-fiber strands can be changed, and it becomes to achieve a uniform distribution of the reinforcing-fiber strands.

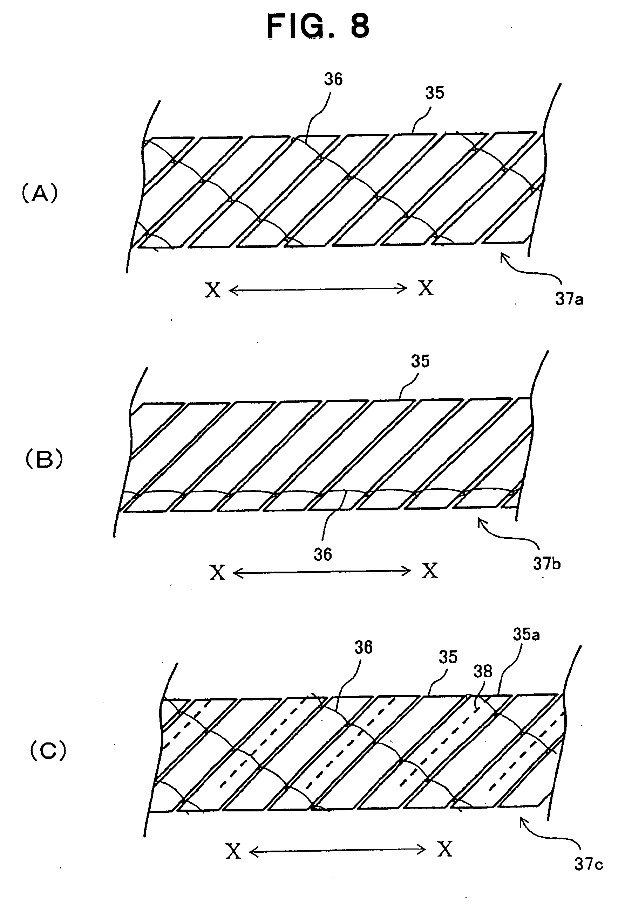

Further, other examples for cases each where the reinforcing-fiber strands are arranged at an angle in a range of 30 degrees or more and 90 degrees or less relative to the longitudinal direction of the substrate will be shown. For example, in Fig. 8(A), an embodiment of a unidirectional reinforcing-fiber strip substrate 37a is shown which is prepared by arranging reinforcing-fiber strands 35 at an angle of 45 degrees relative to the longitudinal direction X-X of the substrate and connecting them to each other by a plurality of auxiliary yarns 36 extending in a direction across them. In Fig. 8(B), an embodiment of a unidirectional reinforcing-fiber strip substrate 37b is shown, as compared with the embodiment shown in Fig. 8(A), which is prepared by connecting reinforcing-fiber strands 35 to each other by a single auxiliary yarn 36 extending in the longitudinal direction X-X of the substrate. In Fig. 8(C), an embodiment of a unidirectional reinforcing-fiber strip substrate 37c is shown, as compared with the embodiment shown in Fig. 8(A), which is prepared by arranging reinforcing-fiber strands 35 and reinforcing-fiber strands 35a each having a cut line 38 alternately and connecting them to each other by a plurality of auxiliary yarns 36 extending in a direction across them.

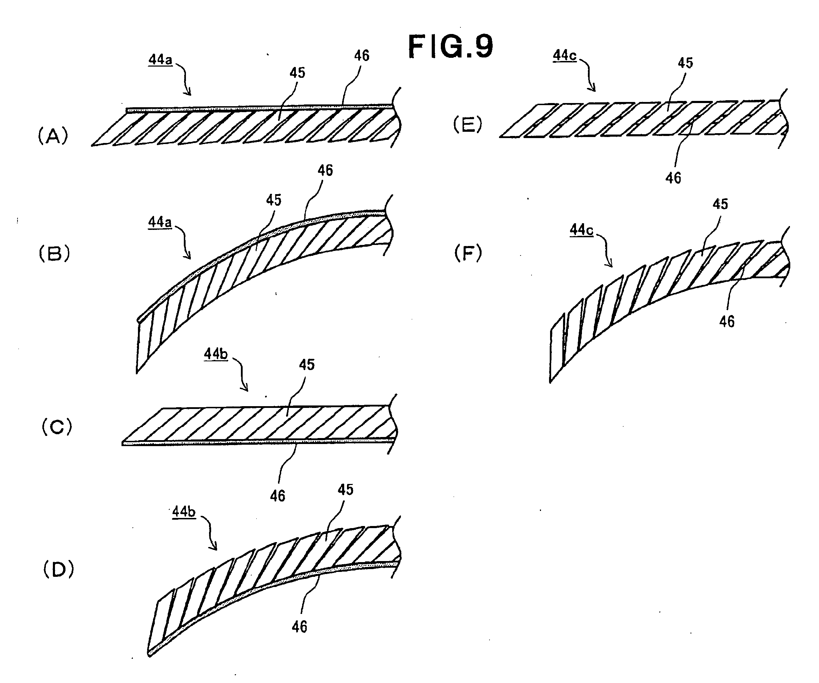

For such a unidirectional reinforcing-fiber strip substrate prepared by arranging reinforcing-fiber strands at an angle of 45 degrees relative to the longitudinal direction X-X of the substrate, in order to deform it to be curved, for example, a flexible member as shown in Fig. 9 can be used. The embodiment shown in Figs. 9 (A) and (B) has a structure corresponding to that shown in Figs. 7 (A) and (B), the embodiment shown in Figs. 9 (C) and (D) has a structure corresponding to that shown in Figs. 7 (C) and (D), and the embodiment shown in Figs. 9 (E) and (F) has a structure corresponding to that shown in Figs. 7 (E) and (F). Namely, shown are flexible members 44a, 44b and 44c wherein respective small pieces 45, which are disposed at an angle of 45 degrees relative to the longitudinal direction X-X of the substrate before curving and which comprise resin plates for example, are connected to each other by, for example, a metal plate spring 46 which extends straightly at no-load condition.

Further, in the present invention, in the above-described case using a unidirectional substrate in which the reinforcing-fiber strands are connected to each other by an auxiliary yarn extending in a direction across them and the reinforcing-fiber strands are arranged at an angle of 30 degrees or more and 90 degrees or less relative to the longitudinal direction of the substrate, it is preferred to give a room to the auxiliary yarn so that the gap between the reinforcing-fiber strands at a state before curving satisfies the following equation and to contract the interval between the reinforcing-fiber strands at the time of curving by contracting the inner-radius side of the circular-arc shape. In such a configuration, can be avoided problems in that the deformation of the reinforcing-fiber substrate is damaged by bridging of the auxiliary yarn caused by receiving a tension at the time of curving and in that the reinforcing-fiber strands come into contact with each other at the inner-radius side of the circular arc because of lack in gap between reinforcing-fiber strands and the deformation of contraction cannot progress, and therefore, a more uniform distribution of the reinforcing-fiber strands can be achieved, and as described later, a pretreatment such as cutting of auxiliary yarn becomes unnecessary.

$$ d/W1 \geqq W2/r1 $$

Where, the meanings of the respective signs are as follows as shown in Fig. 6(A).
W1: Width of reinforcing-fiber strand
d : Gap between reinforcing-fiber strands
r1: Inner radius of circular-arc shape
W2: Width of unidirectional reinforcing-fiber substrate

Where, the material of the flexible member is not particularly limited, as long as it is a material capable of being deformed into the above-described curved state, and further, being recovered into a straight state, and as aforementioned, a soft material such as a rubber or an elastomer or a hard material such as a metal or a resin can be used solely or as combination. As its shape, a plate-like or prismatic shape can be applied. As the entire shape, except the configuration having divided small pieces as shown in Fig. 4 or Fig. 7, it is also possible to form a flexible member which is formed integrally as a whole without being divided and which can be expanded and contracted both as a whole and partially.

Further, the contact surface of the flexible member with the unidirectional reinforcing-fiber substrate is preferably high in friction with the reinforcing-fiber substrate. Concretely, configurations can be employed for the contact surface such as a low-hardness rubber, a material having fine projections such as a sand paper for example, a metal plate sprayed with a ceramic, or various materials whose surfaces are roughened mechanically. Further, in such means for increasing the coefficient of friction, it is not necessary to apply it over the entire contact surface, it may be applied to some of small pieces forming the flexible member selectively, or may be applied to a part of each small piece, and further, a method for nipping a thin wire netting, which is slightly higher than the height of the small piece, between the small pieces, is also preferred, because the reinforcing-fiber substrate can be caught effectively and a shift of the substrate at the time of curving can be prevented.

Further, as the material of reinforcing fibers, although carbon fibers, glass fibers, aramide fibers, etc. can be exemplified, in particular, carbon fibers are preferred because of high mechanical properties when made finally into a fiber-reinforced resin composite material, and in case where an electrostatic attractor plate is used as means for separating and conveying the support plate and/or the curved reinforcing-fiber substrate from the flexible member, particularly carbon fibers are preferably employed because carbon fibers have a conductivity and a high attraction force can be obtained by the static electricity.

Further, with respect to the configuration of the unidirectional reinforcing-fiber substrate as a target of deformation into a curved shape, except the substrate in which the reinforcing-fiber strands are bound by auxiliary yarns as described above, a substrate may be employed wherein the reinforcing-fiber strands are merely arranged over the whole of the substrate. Further, with the substrate using auxiliary yarns, it is also possible to facilitate its deformation into a curved shape by cutting the auxiliary yarns partially or over the whole thereof.

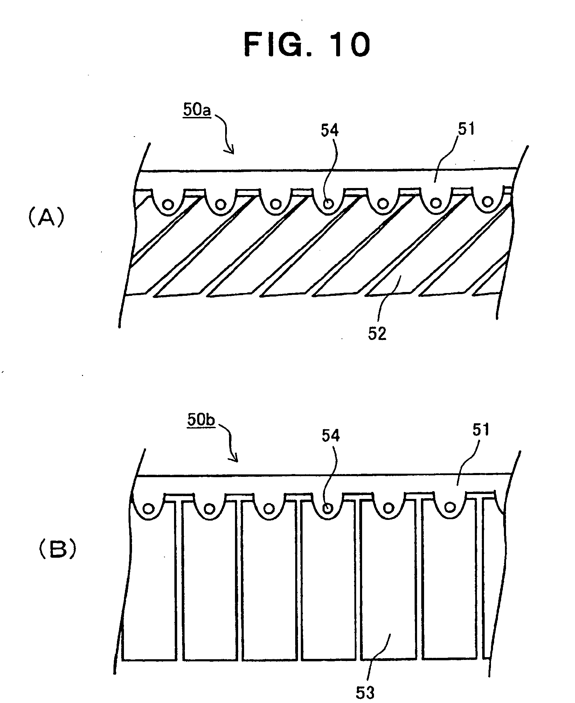

Further, in the present invention, as aforementioned, at an initial condition of a flexible member, a configuration can be employed wherein the respective small pieces are connected to the plate spring as a deformable member at a condition with a constant positional relationship, and a configuration can also be employed wherein the respective small pieces are connected to the deformable member at a condition free to rotate. For example, as shown in Fig. 10(A) (case where the respective small pieces are set so as to have an angle of 45 degrees relative to the longitudinal direction of the substrate) or Fig. 10(B) (case where the respective small pieces are set so as to have an angle of 90 degrees relative to the longitudinal direction of the substrate), configurations of flexible members 50a, 50b can be employed wherein respective small pieces 52, 53 are connected to the deformable member, for example, a metal plate spring 51 via respective pins 54 at a condition free to rotate. Thus, by connecting respective small.pieces 52, 53 at a condition free to rotate, when the flexible members 50a, 50b are deformed into curved shapes, the respective small pieces 52, 53 can be easily rotated to a desired angle, thereby curving also the unidirectional reinforcing-fiber substrate more easily.

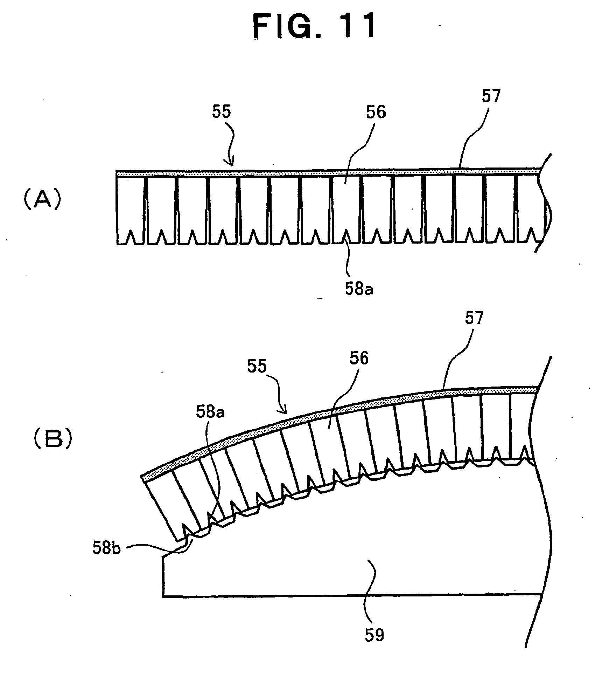

Furthermore, in the present invention, in order to curve the flexible member, in which the respective small pieces are set at an angle of 30 degrees or more and 90 degrees or less, into a predetermined shape more precisely, or in order to be able to maintain the curved shape to a predetermined shape as needed, a configuration can be employed wherein a small piece pitch regulating means is provided for regulating a pitch between adjacent small pieces to a predetermined value at an appropriate position in a longitudinal direction of small piece at a state where the flexible member is bent into a circular-arc shape. For example, in Fig. 11, a flexible member 55 is exemplified in which respective small pieces 56 are connected to, for example, a metal plate spring 57 as the deformable member so as to have an angle of 90 degrees relative to the longitudinal direction of the substrate. As shown in Fig. 11(A), recessed portions 58a (for example, V-notch like recessed portions) are provided on the tips of the respective small pieces 56, when this flexible member 55 is curved, as shown in Fig. 11 (B), by performing an abutting operation and the like relative to a small piece pitch regulating means 59 having projected portions 58b disposed at a predetermined pitch and capable of being fitted into the above-described recessed portions 58a, the respective projected portions 58b and the respective recessed portions 58a corresponding thereto are fitted to each other. Since the respective projected portions 58b are disposed at a predetermined pitch decided in advance, the tip portions of the respective small pieces 56 each having recessed portion 58a are aligned at a desired pitch. At the same time, by setting of the tip surface of small piece pitch regulating means 59 having projected portions 58b at a predetermined curved shape decided in advance, the curved shape of flexible member 55 is also regulated to a desired shape. Namely, the curved shape of flexible member 55 and the pitch of the tip portions of the respective small pieces 56 are set at desired configurations at the same time. Where, although an example is shown in Fig. 11 wherein small piece pitch regulating means 59 is provided relative to the tip portions of the respective small pieces 56, it is possible to provide it relative to portions other than the tip portions of the respective small pieces 56. Further, such a configuration having a small piece pitch regulating means can also be applied to a case other than the case where the respective small pieces are set so as to have an angle of 90 degrees relative to the longitudinal direction of the substrate.

A plate-like reinforcing-fiber layered structure, wherein a plurality of curved unidirectional reinforcing-fiber strip substrates described above are stacked, is formed by repeating the operation of separating and conveying the reinforcing-fiber substrate, deformed by the aforementioned flexible member, from the flexible member, and placing it on a table for layering. This operation for separating and conveying the reinforcing-fiber substrate is efficiently carried out by the aforementioned operation of the support plate. In practice, such a reinforcing-fiber layered structure is used as a material for molding into a target fiber-reinforced composite material.

Using the above-described reinforcing-fiber layered structure, a preform having a predetermined configuration is formed. As the shape of the preform, although an arbitrary shape utilizing the above-described curved shape can be employed, in case where long size and high strength and rigidity are required such as a case for a structural member for a body of an airplane, formed is a shape having a flange portion as its cross-sectional shape.

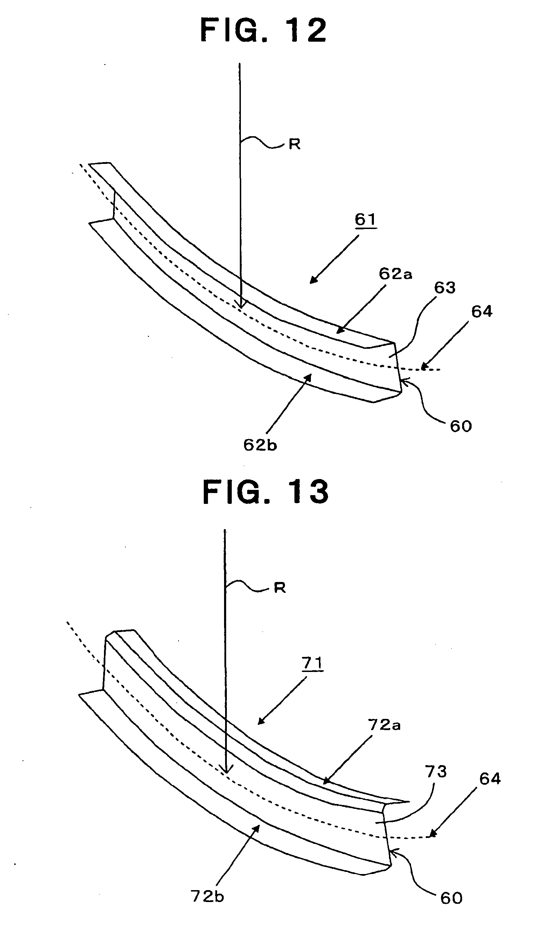

For example, as shown in Fig. 12, using a reinforcing-fiber layered structure 60 such as one described above, a preform 61 curving at a radius of curvature R and extending in the circumferential direction 64 (the longitudinal direction) of the layered structure is formed along a stereo-shaped mold (not shown) having a circular-arc part in the same direction. However, with respect to forming process itself and the mold used for the forming, arbitrary and appropriate process and mold can be used. In such a preform 61, the curved reinforcing-fiber layered structure 60 made as described above is formed in a shape having flange portions 62a, 62b formed by bending the structure along the circumferential edge of the curved shape (namely, along the circumferential direction 64 of the curved shape having a radius of curvature R) as viewed in the cross section of the width direction of the layered structure perpendicular to the longitudinal direction of the layered structure 60. Both flange portions 62a, 62b are formed to be bent in the same direction, and the preform 61 has a C-shaped cross section. The bent angles of flange portions 62a, 62b relative to a web portion 63 may be other than 90 degrees, and the bent angles of flange portions 62a, 62b relative to the web portion 63 may be different from each other. Further, the sizes of flange portions 62a, 62b may also be same or may be different from each other. This preform 61 is a dry preform as an intermediate formed material for molding a fiber-reinforced composite material having a predetermined long-sized curved shape.

A preform 71 shown in Fig. 13 is formed in a shape having flange portions 72a, 72b formed to be curved along the circumferential direction 64 of the curved shape having a radius of curvature R relative to the curved reinforcing-fiber layered structure 60 made as aforementioned. In this embodiment, both flange portions 72a, 72b are formed to be bent in directions opposite to each other relative to a web portion 73, and the preform 71 has a Z-shaped cross section. Other than the cross-sectional shapes shown in Figs. 12 and 13, for example, forming into L-shaped, H-shaped, I-shaped, or T-shaped cross section is possible.

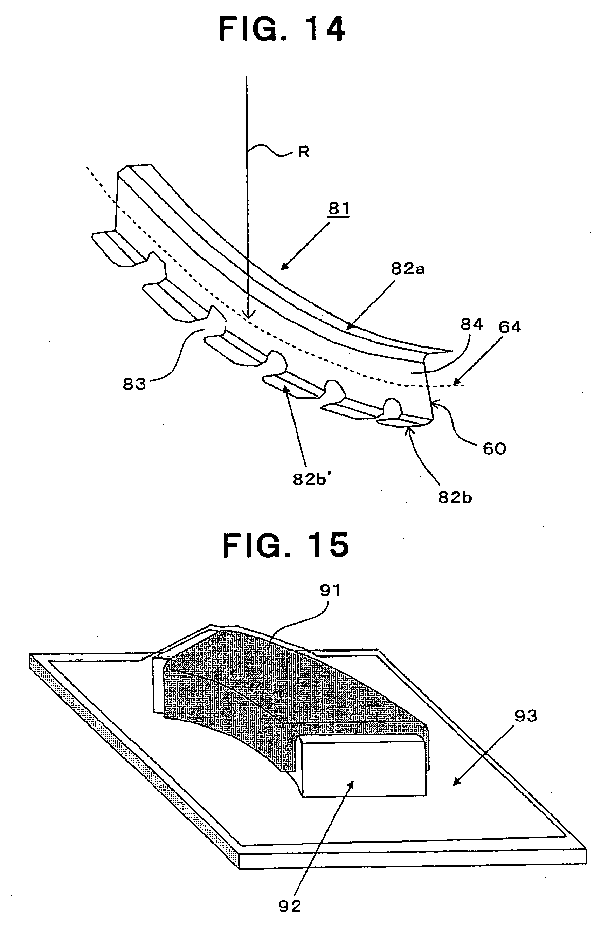

A preform 81 shown in Fig. 14 is formed in a shape having flange portions 82a, 82b formed to be curved along the circumferential direction 64 of the curved shape having a radius of curvature R relative to the curved reinforcing-fiber layered structure 60 made as aforementioned. In this embodiment, both flange portions 82a, 82b are formed to be bent in directions opposite to each other relative to a web portion 84, and the preform 81 has a Z-shaped cross section. Further, in this embodiment, among both flange portions 82a, 82b, the flange portion 82b, which is bent along a circumferential edge of the curved shape at a side having a greater radius of curvature of the curved shape, is divided into a plurality of flange portions 82b' in the longitudinal direction of the layered structure 60, and a space 83 is defined between adjacent divided flange portions 82b'. As shown in the figure, it is preferred that the space 83 extends up to web portion 84 by an appropriate length. Thus, by forming the flange portion 82b at a side having a greater radius of curvature into the shape having space 83 between divided flange portions 82b', it becomes possible to prevent a stress from leaving and wrinkles from occurring at the time of bending.

Using a dry preform formed in a predetermined cross sectional shape as described above, a fiber-reinforced resin composite material having a desired shape is molded by impregnation a matrix resin into the preform and curing the impregnated resin. In this case, a process can also be employed wherein, at the state where the flange portions of the preform are formed, the formed shape of the preform is fixed by heating for a predetermined time, and thereafter, the resin is impregnated. By fixing the formed shape of the preform by heating, the configuration is prevented from being collapsed even at the time of resin impregnation. The molding of a curved fiber-reinforced resin composite material can be carried out, for example, by RTM process (Resin Transfer Molding), and a matrix resin (for example, a thermosetting resin such as an epoxy resin) is impregnated into the preform, the impregnated resin is cured by heating to a predetermined temperature, and a fiber-reinforced resin composite material having a desired shape is produced.

As the process for producing a fiber-reinforced resin composite material having a curved shape, various processes can be employed. For example, a process using a bag material, a process using a double-sided mold, etc. can be employed. Fig. 15 shows an example of a process using a bag material (so called Vacuum-assisted RTM). A preform 91 formed in a predetermined cross-sectional shape is placed on a mold 92, and the preform 91 is covered with a sheet-like bag material 93 and the inside is closed and sealed. The closed and sealed inside is reduced in pressure by evacuation, a matrix resin is injected into the inside reduced in pressure, and the injected resin is impregnated into the preform 91. The impregnated resin is cured, for example, by heating. In such a molding process, since a material having a predetermined area may be used as bag material 93 as long as the mold 92 as a lower mold is made at a high accuracy, a large-sized curved fiber-reinforced resin composite material can be molded extremely easily.

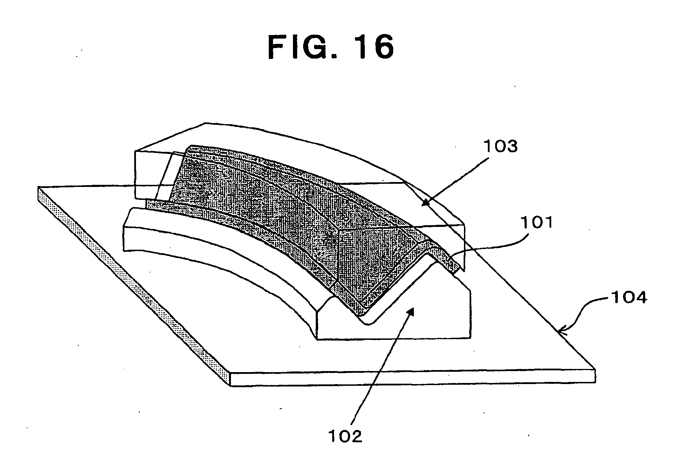

Further, in the molding process shown in Fig. 16, a preform 101 formed into a predetermined cross-sectional shape as aforementioned is placed in a mold 104 comprising a double-sided mold of a lower mold 102 and an upper mold 103, a matrix resin is injected into the mold 104 (any of evacuation-type injection and pressurizing-type injection may be employed), the injected resin is impregnated into the preform, and the impregnated resin is cured, for example, by heating. In such a molding process, because the shape of a fiber-reinforced resin composite material to be molded is defined from both surfaces, it is possible to mold a curved fiber-reinforced resin composite material at a higher accuracy.

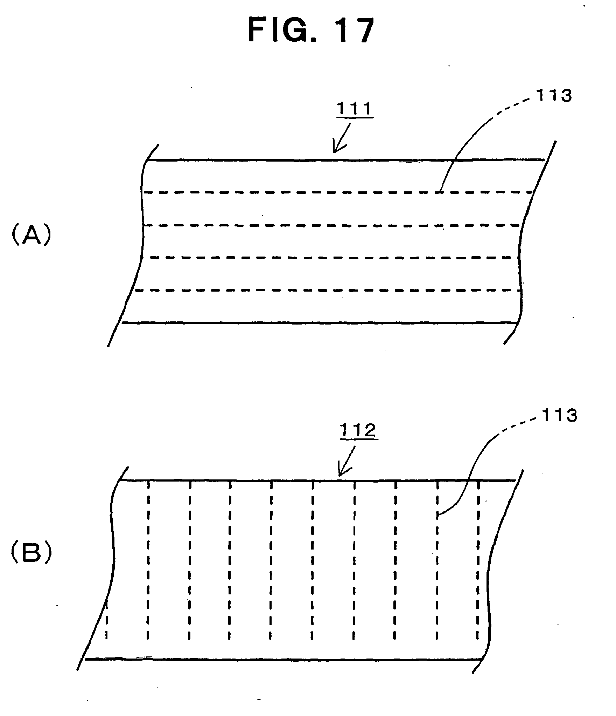

Although the explanation has been carried out based on the case of a unidirectional reinforcing-fiber substrate formed by arranging dry reinforcing-fiber strands in parallel to each other hereinabove, the technology according to the present invention is not limited thereto, a so-called prepreg, in which a thermosetting resin such as an epoxy resin or a thermoplastic resin such as a nylon is impregnated into reinforcing-fiber strands, may be employed, and a so-called semipreg, in which a resin adheres only to the surfaces of reinforcing-fiber strands, may be employed. In this case, the unidirectional reinforcing-fiber substrate is preferably formed such that a flat reinforcing-fiber sheet is formed wherein reinforcing fibers are continuously arranged in a direction across the fibers by a binding force of a resin, and cut lines are provided to the sheet in a direction parallel to the fibers to form respective reinforcing-fiber strands. Concretely, as shown in Fig. 17(A), it is preferred to use a substrate wherein continuous cut lines 113 shown by dot lines are provided to a reinforcing-fiber sheet 111, arranged with reinforcing fibers in a direction parallel to the longitudinal direction of the strip shape, in parallel to the reinforcing fibers, or as shown in Fig. 17(B), it is preferred to use a substrate wherein continuous cut lines 113 shown by dot lines are provided to a reinforcing-fiber sheet 112, arranged with reinforcing fibers in a direction perpendicular to the longitudinal direction of the strip shape, in parallel to the reinforcing fibers. By the presence of cut lines 113, reinforcing fibers are divided into respective strands, similarly to the case explained so far using a unidirectional reinforcing-fiber substrate formed by dry reinforcing-fiber strands, the respective strand units can move individually when the substrate is deformed into a curved shape, and therefore, a desired arrangement configuration of reinforcing-fiber strands for a curved substrate can be achieved.

Further, similarly, also with respect to a reinforcing-fiber layered structure and a preform formed therefrom along a mold, the original material is not limited to a dry reinforcing-fiber substrate, and even if a prepreg or a semipreg is used, the technical advantages according to the present invention can be exhibited.

Industrial Applications of the Invention

The present invention is suitable particularly for molding of a large-scaled, long-sized curved fiber-reinforced resin composite material, forming of a preform served to the molding, a reinforcing-fiber layered structure served to the forming of the preform, and a reinforcing-fiber substrate served to the preparation of the layered structure, and for example, suitable to be applied to molding of a reinforcing member of a circular body of an airplane.

Explanation of symbols

    1: reinforcing-fiber strand
    2: unidirectional reinforcing-fiber substrate
    3: auxiliary yarn
    11: apparatus for producing a reinforcing-fiber strip substrate
    12: flexible member
    12a: contact surface
    13a, 13b: straightening means
    14a, 14b: circular-arc shape achieving means
    15: support plate
    15a: contact surface of support plate
    21: small piece
    31, 31a, 35, 35a: reinforcing-fiber strand
    32, 32a, 32b, 37a, 37b, 37c: unidirectional reinforcing-fiber substrate
    33, 36: auxiliary yarn
    34, 38: cut line
    41, 41a, 41b: flexible member
    42, 45, 52, 56: small piece
    43, 46, 51, 57: metal plate spring
    44a, 44b, 44c, 50a, 50b, 55: flexible member
    58a: recessed portion
    58b: projected portion
    59: small piece pitch regulating means
    60: reinforcing-fiber layered structure
    61, 71, 81: preform
    62a, 62b, 72a, 72b, 82a, 82b: flange portion
    63, 73, 84: web portion
    82a': divided flange portion
    83: space
    91, 101: preform
    92: mold
    93: bag material
    102: lower mold
    103: upper mold
    104: mold formed as a double-sided mold
    111, 112: reinforcing-fiber sheet
    113: cut line

**Claims**

1. A process for producing a reinforcing-fiber strip substrate having a circular-arc part **characterized in that** one surface of a strip-shaped, unidirectional reinforcing-fiber substrate formed by arranging a plurality of reinforcing-fiber strands in one direction in parallel with each other is brought into contact with a flexible member, said unidirectional reinforcing-fiber substrate being contacted is deformed into a circular-arc shape by deforming at least a part of said flexible member into a circular-arc shape in a direction extending along its contact surface with said unidirectional reinforcing-fiber substrate, and thereafter, said flexible member is separated from said unidirectional reinforcing-fiber substrate having been deformed, wherein
a member, formed by a plurality of elongated small pieces capable of being varied with mutual positions which are disposed adjacent to each other, is used as said flexible member, and at a condition where a longitudinal direction of said small pieces and an extending direction of said reinforcing-fiber strands coincide with each other, said one surface of said unidirectional reinforcing-fiber substrate is brought into contact with said flexible member.

2. The process for producing a reinforcing-fiber strip substrate having a circular-arc part according to claim 1, wherein said unidirectional reinforcing-fiber substrate is heated at a condition where said substrate is deformed into said circular-arc shape, and thereafter, by cooling said substrate, said circular-arc shape of said substrate is fixed.

3. The process for producing a reinforcing-fiber strip substrate having a circular-arc part according to claim 1 or 2, wherein, using a unidirectional reinforcing-fiber substrate arranged with said reinforcing-fiber strands at an angle of 30 degrees or more and 90 degrees or less relative to a longitudinal direction of said substrate, when said flexible member is deformed into said circular-arc shape, an interval between said reinforcing-fiber strands adjacent to each other is changed at least at one position in a longitudinal direction of said reinforcing-fiber strands by contracting an inner-radius side of said circular-arc shape in a circumferential direction and/or expanding an outer-radius side of said circular-arc shape in a circumferential direction.

4. The process for producing a reinforcing-fiber strip substrate having a circular-arc part according to claim 3, wherein, using a unidirectional reinforcing-fiber substrate formed by connecting said reinforcing-fiber strands to each other by auxiliary yarns extending in a direction across said reinforcing-fiber strands in which a gap between said reinforcing-fiber strands satisfies the following equation, when said flexible member is deformed into said circular-arc shape, said interval between said reinforcing-fiber strands is contracted by contracting an inner-radius side of said circular-arc shape in a circumferential direction.

$$d/W1 \geqq W2/r1$$

W1: Width of reinforcing-fiber strand
d : Gap between reinforcing-fiber strands
r1: Inner radius of circular-arc shape
W2: Width of unidirectional reinforcing-fiber substrate

5. The process for producing a reinforcing-fiber strip substrate having a circular-arc part according to claim 1 or 2, wherein, using a unidirectional reinforcing-fiber substrate arranged with reinforcing-fiber strands in a longitudinal direction of said substrate in parallel with each other, when said flexible member is deformed into said circular-arc shape, said flexible member is deformed so that said reinforcing-fiber strands mutually move in their longitudinal directions at a condition of parallel displacement.

6. The process for producing a reinforcing-fiber strip substrate having a circular-arc part according to any of claims 1 to 5, wherein, when said flexible member is deformed into said circular-arc shape, a support plate having a flat surface is disposed at a side of said unidirectional reinforcing-fiber substrate, opposite to a side disposed with said flexible member, and said unidirectional reinforcing-fiber substrate is nipped by said flexible member and said support plate.

7. The process for producing a reinforcing-fiber strip substrate having a circular-arc part according to claim 6, wherein an electrostatic attractor plate capable of attracting an object material by a static electricity is used as said support plate.

8. An apparatus for producing a reinforcing-fiber strip substrate having a circular-arc part **characterized in that** said apparatus is for deforming at least a part of a strip-shaped, unidirectional reinforcing-fiber substrate, formed by arranging a plurality of reinforcing-fiber strands in one direction in parallel with each other, into a circular-arc shape, and said apparatus comprises a flexible member having a flat contact surface with said unidirectional reinforcing-fiber substrate in which said contact surface can be bent from a straight state in a longitudinal direction into a circular-arc shape in a direction along said contact surface, a straightening means for straightening said flexible member in said longitudinal direction, and a circular-arc shape achieving means for making said flexible member in a state of said circular-arc shape wherein

said flexible member comprises a plurality of elongated small pieces capable of being varied with mutual positions which are disposed adjacent to each other.

9. The apparatus for producing a reinforcing-fiber strip substrate having a circular-arc part according to claim 8, wherein said contact surface of said flexible member is formed by arranging a plurality of elongated small pieces extending in a direction across a longitudinal direction of said contact surface in parallel with each other along said longitudinal direction of said contact surface, longitudinal directions of respective small pieces are set at angles of 30 degrees or more and 90 degrees or less relative to said longitudinal direction of said contact surface, and respective small pieces are provided so as to be able to be rotated relative to each other or so as to be able to be rotated relative to each other and moved relative to each other in said longitudinal directions of small pieces.

10. The apparatus for producing a reinforcing-fiber strip substrate having a circular-arc part according to claim 9, wherein said flexible member comprises a deformable member capable of being recovered to a straightened shape from a shape bent into a circular-arc shape, and said small pieces connected thereto.

11. The apparatus for producing a reinforcing-fiber strip substrate having a circular-arc part according to claim 10, wherein said small pieces are connected to said deformable member at a condition with a constant positional relationship.

12. The apparatus for producing a reinforcing-fiber strip substrate having a circular-arc part according to claim 10, wherein said small pieces are connected to said deformable member at a condition free to rotate.

13. The apparatus for producing a reinforcing-fiber strip substrate having a circular-arc part according to any of claims 9 to 12, wherein a small piece pitch regulating means is provided for regulating a pitch between adjacent small pieces to a predetermined value at an appropriate position in a longitudinal direction of small piece at a state where said flexible member is bent into a circular-arc shape.

14. The apparatus for producing a reinforcing-fiber strip substrate having a circular-arc part according to claim 8, wherein said contact surface of said flexible member is formed by arranging a plurality of elongated small pieces extending in a direction along a longitudinal direction of said contact surface in parallel with each other along a direction across said longitudinal direction of said contact surface, and respective small pieces are constituted so as to be able to be deformed into a circular-arc shape in a direction along said contact surface and are provided so that small pieces adjacent to each other can mutually move in their longitudinal directions at a condition of parallel displacement when deformed into said circular-arc shape.

## Patentansprüche

1. Verfahren zum Herstellen eines Verstärkungsfaserstreifensubstrats mit einem kreisbogenförmigen Teil, **dadurch gekennzeichnet, dass** eine Oberfläche eines streifenförmigen, unidirektionalen Verstärkungsfasersubstrats, das durch Anordnen einer Mehrzahl von Verstärkungsfasersträngen in einer Richtung parallel zueinander ausgebildet ist, in Kontakt mit einem flexiblen Element gebracht wird, wobei das unidirektionale Verstärkungsfasersubstrat, das kontaktiert wird, in eine Kreisbogenform verformt wird, indem zumindest ein Teil des flexiblen Elements in eine Kreisbogenform in einer Richtung verformt wird, die sich längs dessen Kontaktfläche mit dem unidirektionalen Verstärkungsfasersubstrat erstreckt, und das flexible Element danach vom unidirektionalen Verstärkungsfasersubstrat, das verformt wurde, getrennt wird, wobei
ein Element, das aus einer Mehrzahl von länglichen kleinen Stücken gebildet ist, die mit gegenseitigen Positionen variierbar sind, die benachbart zueinander angeordnet sind, als das flexible Element verwendet wird, und in einem Zustand, bei dem eine Längsrichtung der kleinen Stücke und eine Erstreckungsrichtung der Verstärkungsfaserstränge miteinander übereinstimmen, die eine Fläche des unidirektionalen
Verstärkungsfasersubstrats in Kontakt mit dem flexiblen Element gebracht wird.

2. Verfahren zum Herstellen eines Verstärkungsfaserstreifensubstrats mit einem kreisbogenförmigen Teil nach Anspruch 1, wobei das unidirektionale Verstärkungsfasersubstrat auf einen Zustand erhitzt wird, bei dem das Substrat in die Kreisbogenform verformt wird, und die Kreisbogenform des Substrats anschließend durch Kühlen des Substrats fixiert wird.

3. Verfahren zum Herstellen eines Verstärkungsfaserstreifensubstrats mit einem kreisbogenförmigen Teil nach Anspruch 1 oder 2, wobei, wenn das flexible Element unter Verwendung eines unidirektionalen Verstärkungsfasersubstrats, das mit den Verstärkungsfasersträngen mit einem Winkel von 30 Grad oder mehr und 90 Grad oder weniger bezogen auf eine Längsrichtung des Substrats aufgebaut ist, in die Kreisbogenform verformt wird, ein Abstand zwischen den zueinander benachbarten Verstärkungsfasersträngen zumindest an einer Position in einer Längsrichtung der Verstärkungsfaserstränge durch Zusammenziehen einer Innenradiusseite der kreisbogenförmigen Form in Umfangsrichtung und/oder durch Ausweiten einer Außenradiusseite der kreisbogenförmigen Form in Umfangsrichtung verändert wird.

4. Verfahren zum Herstellen eines Verstärkungsfaserstreifensubstrats mit einem kreisbogenförmigen Teil nach Anspruch 3, wobei, wenn das flexible Element unter Verwendung eines unidirektionalen Verstärkungsfasersubstrats, das durch Verbinden der Verstärkungsfaserstränge untereinander mit sich in einer Richtung quer zu den Verstärkungsfasersträngen erstreckenden Hilfsgarnen gebildet ist, wobei ein Spalt zwischen den Verstärkungsfasersträngen die nachfolgende Gleichung erfüllt, in die Kreisbogenform verformt wird, der Abstand zwischen den Verstärkungsfasersträngen durch Zusammenziehen einer Innenradiusseite der kreisbogenförmigen Form in Umfangsrichtung verkürzt wird.

$$d/W1 \geq W2/r1$$

W1: Breite eines Verstärkungsfaserstrangs
d: Spalt zwischen den Verstärkungsfasersträngen
r1: Innenradius der kreisbogenförmigen Form
W2: Breite des unidirektionalen Verstärkungsfasersubstrats

5. Verfahren zum Herstellen eines Verstärkungsfaserstreifensubstrats mit einem kreisbogenförmigen Teil nach Anspruch 1 oder 2, wobei, wenn das flexible Element unter Verwendung eines unidirektionalen Verstärkungsfasersubstrats, das mit den Verstärkungsfasersträngen in einer Längsrichtung des Substrats parallel zueinander aufgebaut ist, in die Kreisbogenform verformt wird, das flexible Element so verformt wird, dass sich die Verstärkungsfaserstränge in deren Längsrichtungen gegenseitig in einem Zustand einer Parallelverschiebung bewegen.

6. Verfahren zum Herstellen eines Verstärkungsfaserstreifensubstrats mit einem kreisbogenförmigen Teil nach einem der Ansprüche 1 bis 5, wobei, wenn das flexible Element in die Kreisbogenform verformt wird, eine Trägerplatte mit einer ebenen Oberfläche auf einer Seite des unidirektionalen Verstärkungsfasersubstrats gegenüber einer mit dem flexiblen Element angeordneten Seite angeordnet wird, und das unidirektionale Verstärkungsfasersubstrat durch das flexible Element und die Trägerplatte eingeklemmt wird.

7. Verfahren zum Herstellen eines Verstärkungsfaserstreifensubstrats mit einem kreisbogenförmigen Teil nach Anspruch 6, wobei eine elektrostatische Anziehungsplatte, die ein Objektmaterial durch statische Elektrizität anziehen kann, als Trägerplatte verwendet wird.

8. Vorrichtung zum Herstellen eines Verstärkungsfaserstreifensubstrats mit einem kreisbogenförmigen Teil, **dadurch gekennzeichnet, dass** die Vorrichtung zum Verformen zumindest eines Teils eines streifenförmigen unidirektionalen Verstärkungsfasersubstrats vorgesehen ist, das durch Anordnen einer Mehrzahl von Verstärkungsfastersträngen in einer Richtung parallel zueinander in eine Kreisbogenform gebildet ist, und die Vorrichtung ein flexibles Element mit einer ebenen Kontaktfläche mit dem unidirektionalen Verstärkungsfasersubstrat aufweist, wobei die Kontaktfläche von einem geraden Zustand in einer Längsrichtung in eine Kreisbogenform in einer Richtung längs der Kontaktfläche gebogen werden kann, eine Begradigungseinrichtung zum Begradigen des flexiblen Elements in der Längsrichtung, und eine Einrichtung zum Erreichen einer kreisbogenförmigen Form, um das flexible Element in einen Zustand der kreisbogenförmigen Form zu versetzen, wobei
das flexible Element eine Mehrzahl von länglichen kleinen Stücken aufweist, die mit gegenseitigen Positionen variierbar sind, die benachbart zueinander angeordnet sind.

9. Vorrichtung zum Herstellen eines Verstärkungsfaserstreifensubstrats mit einem kreisbogenförmigen Teil nach Anspruch 8, wobei die Kontaktfläche des flexiblen Elements durch Anordnen einer Mehrzahl von länglichen kleinen Stücken gebildet ist, die sich in einer Richtung quer zu einer Längsrichtung der Kontaktfläche parallel zueinander entlang der Längsrichtung der Kontaktfläche erstrecken, die Längsrichtungen der jeweiligen kleinen Stücke in Winkeln von 30 Grad oder mehr und 90 Grad oder weniger bezogen auf die Längsrichtung der Kontaktfläche eingerichtet sind, und die jeweiligen kleinen Stücke relativ zueinander drehbar oder relativ zueinander drehbar und relativ zueinander bewegbar in den Längsrichtungen der kleinen Stücke vorgesehen sind.

10. Vorrichtung zum Herstellen eines Verstärkungsfaserstreifensubstrats mit einem kreisbogenförmigen Teil nach Anspruch 9, wobei das flexible Element ein verformbares Element aufweist, das von einer Form, die in einer Kreisbogenform gebogen ist, in eine begradigte Form wiederhergestellt werden kann, und die kleinen Stücke damit verbunden sind.

11. Vorrichtung zum Herstellen eines Verstärkungsfaserstreifensubstrats mit einem kreisbogenförmigen Teil nach Anspruch 9, wobei die kleinen Stücke mit dem verformbaren Element in einem Zustand mit einer konstanten Positionsbeziehung verbunden sind.

12. Vorrichtung zum Herstellen eines Verstärkungsfaserstreifensubstrats mit einem kreisbogenförmigen Teil nach Anspruch 10, wobei die kleinen Stücke mit dem verformbaren Element in einem frei drehbaren Zustand verbunden sind.

13. Vorrichtung zum Herstellen eines Verstärkungsfaserstreifensubstrats mit einem kreisbogenförmigen Teil nach einem der Ansprüche 9 bis 12, wobei eine Abstandsregulierungseinrichtung für ein kleines Stück zum Regulieren eines Abstands zwischen benachbarten kleinen Stücken auf einen vorgegebenen Wert an einer geeigneten Position in einer Längsrichtung des kleinen Stücks in einem Zustand vorgesehen ist, bei dem das flexible Element in eine Kreisbogenform gebogen ist.

14. Vorrichtung zum Herstellen eines Verstärkungsfaserstreifensubstrats mit einem kreisbogenförmigen Teil nach Anspruch 8, wobei die Kontaktfläche des flexiblen Elements durch Anordnen einer Mehrzahl von länglichen kleinen Stücken ausgebildet ist, die sich in einer Richtung entlang einer Längsrichtung der Kontaktfläche parallel zueinander entlang einer Richtung quer zur Längsrichtung der Kontaktfläche erstrecken, und die jeweiligen kleinen Stücke in einer Richtung längs der Kontaktfläche in eine Kreisbogenform verformbar gebildet sind und so vorgesehen sind, dass zueinander benachbarte kleine Stükke bei Verformung in die Kreisbogenform sich gegenseitig in deren Längsrichtungen in einem Zustand einer Parallelverschiebung bewegen können.

**Revendications**

1. Procédé pour produire un substrat de bande en fibres de renforcement ayant une partie d'arc circulaire, **caractérisé en ce qu'**une surface d'un substrat en fibres de renforcement unidirectionnelles en forme de bande réalisé en agençant une pluralité de brins de fibres de renforcement dans une direction en parallèle les uns aux autres est mise en contact avec un organe flexible, ledit substrat en fibres de renforcement unidirectionnelles étant mis en contact est déformé dans une forme d'arc circulaire en déformant au moins une partie dudit organe flexible dans une forme d'arc circulaire dans une direction s'étendant le long de sa surface de contact avec ledit substrat en fibres de renforcement unidirectionnelles, puis ledit organe flexible est séparé dudit substrat en fibres de renforcement unidirectionnelles ayant été déformé, dans lequel

un organe, constitué d'une pluralité de petits morceaux allongés capables d'être variés avec des positions mutuelles qui sont disposés adjacents les uns aux autres, est utilisé en tant que ledit organe flexible, et dans un état dans lequel une direction longitudinale desdits petits morceaux et une direction d'extension desdits brins de fibres de renforcement coïncident l'une avec l'autre, ladite une surface dudit substrat en fibres de renforcement unidirectionnelles étant mise en contact avec ledit organe flexible.

2. Procédé pour produire un substrat de bande en fibres de renforcement ayant une partie d'arc circulaire selon la revendication 1, dans lequel ledit substrat en fibres de renforcement unidirectionnelles est chauffé dans un état dans lequel ledit substrat est déformé dans ladite forme d'arc circulaire, puis, en refroidissant ledit substrat, ladite forme d'arc circulaire dudit substrat est fixée.

3. Procédé pour produire un substrat de bande en fibres de renforcement ayant une partie d'arc circulaire selon la revendication 1 ou 2, dans lequel, en utilisant un substrat en fibres de renforcement unidirectionnelles agencé avec lesdits brins de fibres de renforcement à un angle de 30 degrés ou plus et de 90 degrés ou moins par rapport à une direction longitudinale dudit substrat, lorsque ledit organe flexible est déformé dans ladite forme d'arc circulaire, un intervalle entre lesdits brins de fibres de renforcement adjacents les uns aux autres est changé au moins à une position dans une direction longitudinale desdits brins de fibres de renforcement par contraction d'un côté de rayon intérieur de ladite forme d'arc circulaire dans une direction circonférentielle et/ou par expansion d'un côté de rayon extérieur de ladite forme d'arc circulaire dans une direction circonférentielle.

4. Procédé pour produire un substrat de bande en fibres de renforcement ayant une partie d'arc circulaire selon la revendication 3, dans lequel, en utilisant un substrat en fibres de renforcement unidirectionnelles constitué en reliant lesdits brins de fibres de renforcement les uns aux autres par des fils auxiliaires s'étendant dans une direction à travers lesdits brins de fibres de renforcement, où un espacement entre lesdits brins de fibres de renforcement respecte l'équation suivante, lorsque ledit organe flexible est déformé dans ladite forme d'arc circulaire, ledit intervalle entre lesdits brins de fibres de renforcement est contracté par contraction d'un côté de rayon intérieur de ladite forme d'arc circulaire dans une direction circonférentielle,

$$d/W1 \geq W2/r1$$

où
W1 : largeur de brin de fibre de renforcement
d : espacement entre des brins de fibres de renforcement r1 : rayon intérieur de forme d'arc circulaire
W2 : largeur de substrat en fibres de renforcement unidirectionnelles.

5. Procédé pour produire un substrat de bande en fibres de renforcement ayant une partie d'arc circulaire selon la revendication 1 ou 2, dans lequel, en utilisant un substrat en fibres de renforcement unidirectionnelles agencé avec des brins de fibres de renforcement dans une direction longitudinale dudit substrat en parallèle les uns aux autres, lorsque ledit organe flexible est déformé dans ladite forme d'arc circulaire, ledit organe flexible est déformé de sorte que lesdits brins de fibres de renforcement se déplacent mutuellement dans leurs directions longitudinales dans un état de déplacement parallèle.

6. Procédé pour produire un substrat de bande en fibres de renforcement ayant une partie d'arc circulaire selon l'une quelconque des revendications 1 à 5, dans lequel, lorsque ledit organe flexible est déformé dans ladite forme d'arc circulaire, une plaque de support ayant une surface plate est disposée sur un côté dudit substrat en fibres de renforcement unidirectionnelles à l'opposé d'un côté disposé avec ledit organe flexible, et ledit substrat en fibres de renforcement unidirectionnelles est pincé par ledit organe flexible et ladite plaque de support.

7. Procédé pour produire un substrat de bande en fibres de renforcement ayant une partie d'arc circulaire selon la revendication 6, dans lequel une plaque d'attraction électrostatique capable d'attirer un matériau d'objet par électricité statique est utilisée en tant que ladite plaque de support.

8. Appareil pour produire un substrat de bande en fibres de renforcement ayant une partie d'arc circulaire, **caractérisé en ce que** ledit appareil est destiné à déformer au moins une partie d'un substrat en fibres de renforcement unidirectionnelles en forme de bande constitué en agençant une pluralité de brins de fibres de renforcement dans une direction en parallèle les uns aux autres, dans une forme d'arc circulaire, et ledit appareil comprend un organe flexible ayant une surface de contact plate avec ledit substrat en fibres de renforcement unidirectionnelles, ladite surface de contact pouvant être pliée d'un état droit dans une direction longitudinale à une forme d'arc circulaire dans une direction le long de ladite surface de contact, un moyen de redressement pour redresser ledit organe flexible dans ladite direction longitudinale, et un moyen de réalisation de forme d'arc circulaire pour donner au dit organe flexible ladite forme d'arc circulaire, dans lequel ledit organe flexible comprend une pluralité de petits morceaux allongés capables d'être variés avec des positions mutuelles qui sont disposés adjacents les uns aux autres.

9. Appareil pour produire un substrat de bande en fibres de renforcement ayant une partie d'arc circulaire selon la revendication 8, dans lequel ladite surface de contact dudit organe flexible est constituée en agençant une pluralité de petits morceaux allongés s'étendant dans une direction à travers une direction longitudinale de ladite surface de contact en parallèle les uns aux autres le long de ladite direction longitudinale de ladite surface de contact, les directions longitudinales des petits morceaux respectifs sont réglées à des angles de 30 degrés ou plus et de 90 degrés ou moins par rapport à ladite direction longitudinale de ladite surface de contact, et des petits morceaux respectifs sont fournis de manière à pouvoir être tournés l'un par rapport à l'autre ou de manière à pouvoir être tournés l'un par rapport à l'autre et déplacés l'un par rapport à l'autre dans lesdites directions longitudinales des petits morceaux.

10. Appareil pour produire un substrat de bande en fibres de renforcement ayant une partie d'arc circulaire selon la revendication 9, dans lequel ledit organe flexible comprend un organe déformable capable de reprendre une forme droite à partir d'une forme pliée en forme d'arc circulaire, et lesdits petits morceaux qui lui sont reliés.

11. Appareil pour produire un substrat de bande en fibres de renforcement ayant une partie d'arc circulaire selon la revendication 10, dans lequel lesdits petits morceaux sont reliés au dit organe déformable dans un état avec une relation positionnelle constante.

12. Appareil pour produire un substrat de bande en fibres de renforcement ayant une partie d'arc circulaire selon la revendication 10, dans lequel lesdits petits morceaux sont reliés au dit organe déformable dans un état de rotation libre.

13. Appareil pour produire un substrat de bande en fibres de renforcement ayant une partie d'arc circulaire selon l'une quelconque des revendications de 9 à 12, dans lequel un moyen de régulation de pas de petits morceaux est fourni pour réguler un pas entre des petits morceaux adjacents à une valeur prédéterminée à une position appropriée dans une direction longitudinale de petits morceaux dans un état dans lequel ledit organe flexible est plié dans une forme d'arc circulaire.

14. Appareil pour produire un substrat de bande en fibres de renforcement ayant une partie d'arc circulaire selon la revendication 8, dans lequel ladite surface de contact dudit organe flexible est constituée en agençant une pluralité de petits morceaux allongés s'étendant dans une direction le long d'une direction longitudinale de ladite surface de contact en parallèle les uns aux autres le long d'une direction à travers ladite direction longitudinale de ladite surface de contact, et des petits morceaux respectifs sont constitués de manière à pouvoir être déformés dans une forme d'arc circulaire dans une direction le long de ladite surface de contact et sont fournis de sorte que des petits morceaux adjacents les uns aux autres puissent se déplacer mutuellement dans leurs directions longitudinales dans un état de déplacement parallèle lorsqu'ils sont déformés dans ladite forme d'arc circulaire.

# FIG. 1

# FIG. 2

# FIG. 3

(A)

(B)

EP 2 392 714 B1

# FIG. 4

(A)

(B)

# FIG. 5

# FIG. 6

(A)

(B)

(C)

FIG.7

# FIG. 8

(A)

(B)

(C)

# FIG.9

(A) 44a, 45, 46

(B) 44a, 45, 46

(C) 44b, 45, 46

(D) 44b, 45, 46

(E) 44c, 45, 46

(F) 44c, 45, 46

# FIG. 10

(A)

(B)

# FIG. 11

(A)

(B)

# FIG. 12

# FIG. 13

# FIG. 14

# FIG. 15

# FIG. 16

103
101
104
102

# FIG. 17

(A)

111

- - - 113

(B)

112

- - - 113

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004016844 A
- JP 2004218133 A
- EP 1932652 A1
- WO 2007018935 A1